# EUROPÄISCHE PATENTSCHRIFT

(11) **EP 0 638 377 B1**
(45) Veröffentlichungstag und Bekanntmachung des Hinweises auf die Patenterteilung: **11.02.1998**
(21) Anmeldenummer: 93111347.6
(22) Anmeldetag: 15.07.1993
(51) Int. Cl.: B21D 53/74

(54) **Stanzkopf für Eckverbindungsmaschinen**
Punch head in corner joining machines
Tête de poinçonnage dans des machines à joindre les coins

(30) Priorität: 12.03.1993 DE 4307893
(43) Veröffentlichungstag der Anmeldung: 15.02.1995
(73) Patentinhaber: PRESSTA- EISELE GmbH, 56859 Bullay (DE)
(72) Erfinder: Hunke, Heinz-Theo, 56821 Ellenz-Poltersdorf (DE)
(74) Vertreter: Grommes, Karl F., Dr.

(56) Entgegenhaltungen:
- DE-A- 2 526 857
- DE-A- 4 135 489

## Beschreibung

### Technisches Gebiet

Die Erfindung betrifft einen Stanzkopf in einer Eckverbindungsmaschine zum Verbinden von Hohlprofilteilen mit in diesen angeordneten Eckwinkeln.

### Stand der Technik

Zur rationellen Fertigung von insbesondere aus Aluminiumhohlprofilen bestehenden Fenster- und Türrahmen werden die entsprechenden Längs- und Querholme auf Gehrung geschnitten und mit in die Hohlkammern der Profile eingebrachten Eckwinkeln verbunden. Die Verbindung erfolgt dabei häufig mit Hilfe einer Eckverbindungsmaschine. Diese besteht im wesentlichen aus einer Tischplatte, auf die die jeweils zu verbindenden Hohlprofilteile mit eingebrachten Eckwinkeln gelegt werden, einem Taster zur genauen Positionierung der Profile, einem Stanzkopf mit Stanzkörper und einem Werkzeug (Stanzmesser) zum Verpressen der Profilteile mit den Eckwinkeln sowie einem Widerlagereinsatz zur Abstützung der Profile beim Stanzvorgang.

Die Eckwinkel weisen unterhalb der Einstanzpunkte Nuten auf, in die das Material der Profile hineingepreßt wird. Da es Eckwinkel mit verschiedenen Nut-Hinterkantenmaßen gibt, muß der Stanzkopf zur genauen Positionierung der Stanzmesser parallel zu dem Schenkel des Eckwinkels, mit dem das jeweilige Profil verpreßt wird, verschiebbar angeordnet sein. Außerdem sind die Stanzmesser hinsichtlich ihrer Höhe gegenüber der Tischplatte einstellbar.

Die Stanzmesser sind der Profilstruktur entsprechend angepaßt, wobei die Hersteller der Eckverbindungsmaschinen standardmäßig zusammen mit der Maschine auch Stanzmesser liefern, die jeweils in der Regel nur eine Schneide (Einzelmesser), aber unterschiedliche Schneidenbreiten besitzen (diese Stanzmesser werden im folgenden auch als Standardwerkzeuge bezeichnet). Die Standardwerkzeuge reichen indessen in vielen Fällen nicht aus. Insbesondere beim Verbinden von Profilen mit mehreren versetzten Eckwinkelkammern müssen Spezialwerkzeuge angefertigt werden, die dann aus mehreren teilweise unterschiedlich langen Stanzmessern (z.B. Gabelmessern) bestehen. Die Herstellung derartiger an die jeweilige Profilstruktur angepaßter Stanzmesser ist nicht nur teuer, da es sich regelmäßig um Sonderanfertigungen handelt, sondern ist auch mit relativ langen Lieferzeiten verbunden.

Aus der DE-A-2526857 ist bereits eine Eckverbindungsmaschine zur Herstellung von Eckverbindungen an Fenster- und Türrahmen bekannt, bei der zur Verbindung entsprechender Hohlprofile mit in diesen angeordneten Eckwinkeln ein Stanzkörper mit einem Werkzeug vorgesehen ist. Der Stanzkörper ist parallel zu einem Schenkel eines Eckwinkels verschiebbar angeordnet, derart, daß das Werkzeug an vorgegebenen Punkten des Hohlprofilteiles auf dieses von außen einwirkt und das jeweilige Hohlprofil an dem Eckwinkel befestigt.

### Darstellung der Erfindung

Der Erfindung liegt daher die Aufgabe zugrunde, einen Stanzkopf der eingangs erwähnten Art zu offenbaren, mit dem ein gleichzeitiges Verpressen eines Profiles mit mehreren versetzten Eckwinkeln unter Verwendung von Standardmessern möglich ist. Insbesondere soll dabei ein Verpressen von vertikal versetzten Eckwinkeln erfolgen können.

Diese Aufgabe wird erfindungsgemäß durch die Merkmale des Anspruchs 1 gelöst. Weitere besonders vorteilhafte Ausgestaltungen der Erfindung offenbaren die Unteransprüche.

Die Erfindung beruht im wesentlichen auf dem Gedanken, zusätzlich zu dem ersten Stanzkörper des Stanzkopfes mindestens einen zweiten Stanzkörper vorzusehen, der zur Berücksichtigung des Versatzes der Eckwinkel gegenüber dem ersten Stanzkörper verschiebbar angeordnet ist. Anstatt für das jeweilige Profilteil Spezialwerkzeuge fertigen zu lassen, schlägt also die Erfindung vor, mehrere separate Standardwerkzeuge zu benutzen und die Anpassung an das Profilteil durch Verschieben der Stanzköpfe gegeneinander vorzunehmen.

### Kurze Beschreibung der Zeichnung

Weitere Einzelheiten und Vorteile der Erfindung ergeben sich aus den folgenden anhand von Figuren erläuterten Ausführungs-beispielen. Es zeigen:
- Fig.1: eine Anordnung von zwei Stanzmessern zum Verpressen eines Profils mit versetzten Eckwinkelkammern,
- Fig.2: eine Seitenansicht eines erfindungsgemäßen Stanzkopfes mit zwei Stanzmessern,
- Fig.3: eine Draufsicht auf den in Fig.2 dargestellten Stanzkopf und
- Fig. 4: eine Draufsicht auf den in Fig.2 dargestellten Stanzkopf zur Erläuterung der Grundeinstellung des Stanzkopfes.

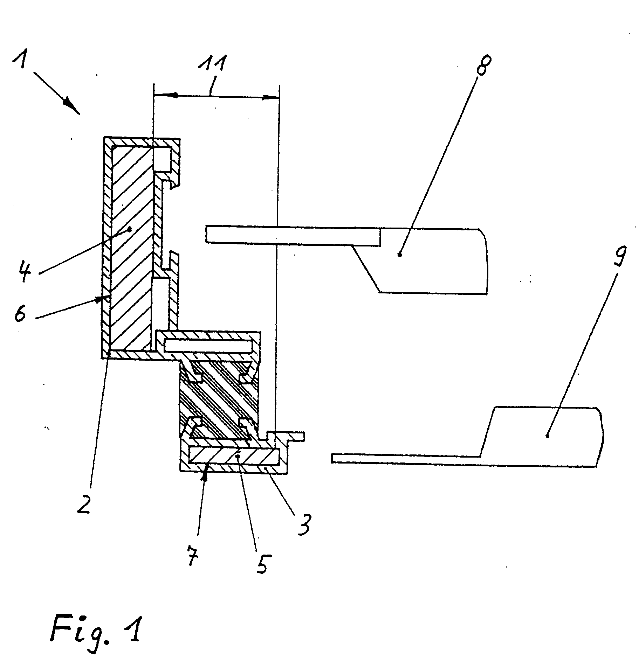

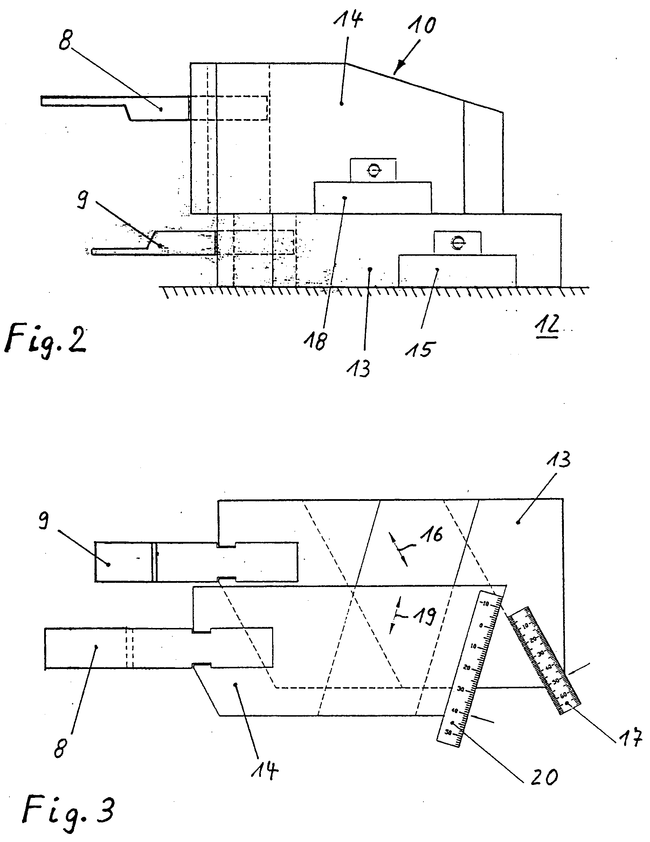

In Fig.1 ist mit 1 ein aus mehreren Kammern bestehendes stranggepreßtes Aluminium-Profilteil, z.B. für ein Fenster, bezeichnet. In den Kammern 2 und 3 befinden sich die entsprechenden Schenkel 4 und 5 zweier Eckwinkel 6 und 7, die mit Hilfe von Stanzmessern 8 und 9 eines Stanzkopfes 10 (vgl. Fig. 2) mit den Kammerwänden des Profilteiles 1 verpreßt werden. Der Versatz der Kammern 2 und 3 ist mit 11 gekennzeichnet. Einen entsprechenden Versatz müssen zum Verpressen des Profils 1 auch die Stanzmesser 8 und 9 aufweisen.

Einen erfindungsgemäßen Stanzkopf 10, der auf einer Tischplatte 12 verschiebbar angeordnet ist, zeigt Fig.2. Er besteht im wesentlichen aus einem ersten Stanzkörper 13, in den das Stanzmesser 9 eingesetzt ist, und einem zweiten Stanzkörper 14, in den das Stanzmesser 8 eingesetzt ist.

Der erste Stanzkörper 13 mit Stanzmesser 9 ist z.B. über eine mechanische Führung 15 parallel zu dem entsprechenden Schenkel 5 des Eckwinkels 7 verschiebbar, so daß in an sich bekannter Weise das Nutmaß dieses Eckwinkels berücksichtigt werden kann. In Fig.3 ist die mögliche Bewegungsrichtung zur Nutmaßeinstellung mit 16 gekennzeichnet, wobei die Verschiebung an einer Eckwinkelnutmeßskala 17 abgelesen werden kann.

Zur Einstellung des Versatzes der Stanzmesser 8 und 9 ist der zweite Stanzkörper 14 ebenfalls z.B. über eine mechanische Führung 18 gegenüber dem ersten Stanzkörper 13 entlang der in Fig.3 mit 19 gekennzeichneten Bewegungsrichtung verschiebbar angeordnet. Die genaue Einstellung des Versatzes kann dabei an einer Versatzskala 20 abgelesen werden. Nach korrekter Einstellung des Versatzes wird der Stanzkörper 14 arretiert.

Die mechanische Führung 18 ist derart gewählt, daß die beiden Stanzkörper 13 und 14 einerseits sehr genau gegeneinander verschiebbar sind und andererseits durch diese Führung eine formschlüssige Verbindung beider Stanzkörper erfolgt. Beides ist beispielsweise mit einer Schwalbenschwanz-Führung erreichbar.

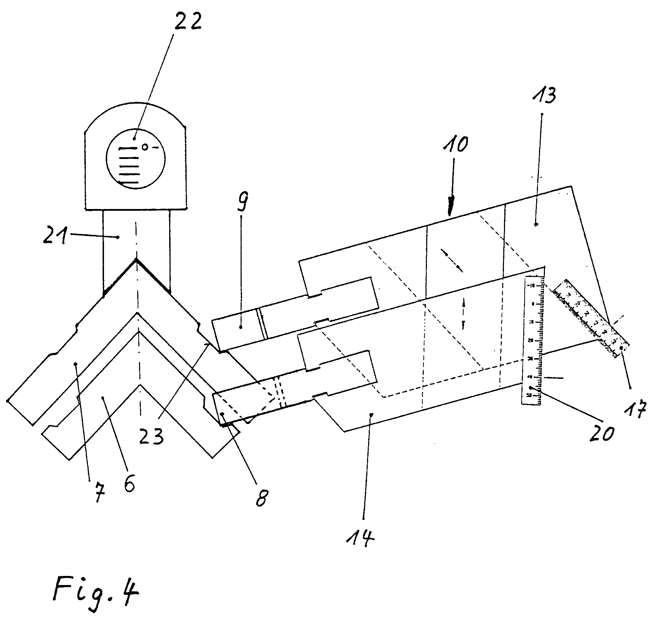

Bevor Hohlprofile verpreßt werden, erfolgt eine Grundeinstellung der Eckverbindungsmaschine. Dieses wird im folgenden mit Hilfe von Fig. 4 erläutert. Dabei sind für gleiche Teile gleiche Bezugszeichen, wie in den Fig. 1-3, benutzt worden. Zusätzlich zu dem Stanzkopf 10 und dem Eckwinkel 7 wird zur Grundeinstellung auch ein an sich bekannter Taster 21 benötigt, der später beim Verpressungsvorgang die Aufgabe hat, die Profile in der Maschine genau zu positionieren.

Für die Grundeinstellung wird -ähnlich wie dieses auch bei bekannten Eckverbindungsmaschinen mit nur einem Stanzkörper erfolgt- zunächst der Eckwinkel 7, wie in Fig.4 dargestellt, in den Taster 21 eingelegt. Der Taster 21 befindet sich dabei ebenfalls in einer für die Grundeinstellung vorgegebenen Position, die beispielsweise mittels eines nicht dargestellten Drehknopfes eingestellt und an einer an dem Taster 21 angeordneten Skala 22 abgelesen werden kann. Anschließend wird der Stanzkörper 13 mit Hilfe der Führung 15 so positioniert, daß das Stanzmesser 9 korrekt in die Eckwinkelnut 23 des Eckwinkels 7 einstanzt. Dann wird der Stanzkörper 13 arretiert.

Schließlich wird der Stanzkörper 14 entsprechend dem am vorhandenen Profil 1 abgemessenen Versatz 11 (vgl. Fig. 1) eingestellt. Hierzu wird der Stanzkörper 14 mit Hilfe der mechanischen Führung 18 so lange verschoben, bis auf der Versatzskala 20 der entsprechende Versatz angezeigt wird. Nach korrekter Einstellung wird auch dieser Stanzkopf 14 arretiert.

Nach Herausnahme des Eckwinkels 7 aus dem Taster 21 kann die entsprechende Materialwandstärke des Profils 1 an dem Taster 21 eingestellt und die zu verpressenden Profile 1 mit den Eckwinkeln 6,7 in den Taster 21 eingelegt werden.

Selbstverständlich ist die Erfindung nicht auf das vorstehend beschriebene Verpressen von Aluminium-Profilen beschränkt, sondern es können beispielsweise mit dem erfindungsgemäßen Stanzkopf auch andere Metallprofile, einschließlich solcher mit einer Kunststoffbeschichtung oder -ummantelung, verpreßt werden.

## Patentansprüche

1. Stanzkopf (10) in einer Eckverbindungsmaschine zum Verbinden von Hohlprofilteilen (1), die mehrere senkrecht zur Fläche, worin die Hohlprofilteile (1) liegen, zueinander versetzte Eckwinkel (6,7) aufweisen, wobei
a) der Stanzkopf (10) einen ersten Stanzkörper (13) enthält, der parallel zu einem ersten Schenkel eines das Hohlprofilteil (1) verbindenden Eckwinkels (6,7) verschiebbar angeordnet ist,
b) in den Stanzkörper (13) Werkzeuge (9) einsetzbar sind, die an vorgegebenen Punkten des Hohlprofilteiles (1) auf dieses von außen einwirken,
c) der Stanzkopf (10) mindestens einen zweiten gegenüber dem ersten Stanzkörper (13) verschieb- und arretierbar angeordneten Stanzkörper (14) mit einsetzbarem Werkzeug (8) aufweist,
d) der zweite Stanzkörper (14) bezüglich des ersten Stanzkörpers (13) parallel zur Fläche, worin die Hohlprofilteile (1) liegen, verschiebbar angeordnet ist, und
e) der zweite Stanzkörper (14) auf dem ersten Stanzkörper (13) angeordnet ist, damit die Werkzeuge (8,9) beider Stanzkörper (13,14) gleichzeitig an mehreren senkrecht zur Fläche, worin die Hohlprofilteile (1) liegen, versetzt liegenden Punkten auf das Hohlprofilteil (1) einwirken.

2. Stanzkopf nach Anspruch 1, dadurch gekennzeichnet, daß der zweite Stanzkörper (14) mit Hilfe einer mechanischen Führung (18) auf dem ersten Stanzkörper (13) und unter einem vorgegebenen Winkel querverschiebbar angeordnet ist.

3. Stanzkopf nach Anspruch 1 oder 2, dadurch gekennzeichnet, daß die beiden Stanzkörper (13,14) über eine mechanische Führung (18) formschlüssig miteinander verbunden sind.

4. Stanzkopf nach einem der Ansprüche 1 bis 3, dadurch gekennzeichnet, daß es sich bei den Werkzeugen (8,9) um Stanzmesser aus Metall handelt, und daß der Stanzkopf (10) zum Bearbeiten von stranggepreßten Aluminium-Profilteilen vorgesehen ist.

## Claims

1. Punch head (10) in a corner joining machine for the joining of hollow section pieces (1), which have several corner angles (6,7) staggered with respect to each other perpendicularly to the surface in which the hollow section pieces (1) lie, in which
a) the punch head (10) contains a first punch body (13) which is arranged so as to be displaceable parallel to a first shank of a corner angle (6, 7) connecting the hollow section piece (1),
b) tools (9) are able to be inserted into the punch body (13) which act at given points of the hollow section piece (1) thereon from the exterior,
c) the punch head (10) has at least a second punch body (14) arranged so as to be displaceable and arrestable with respect to the first punch body (13) and with an insertable tool (8),
d) the second punch body (14) is arranged so as to be displaceable with respect to the first punch body (13) parallel to the surface in which the hollow section pieces (1) lie, and
e) the second punch body (14) is arranged on the first punch body (13), so that the tools (8, 9) of both punch bodies (13, 14) act on the hollow section piece (1) simultaneously at several points lying staggered perpendicularly to the surface in which the hollow section pieces (1) lie.

2. Punch head according to Claim 1, characterised in that the second punch body (14) with the aid of a mechanical guide (18) is arranged on the first punch body (13) and so as to be transversely displaceable at a given angle.

3. Punch head according to Claim 1 or 2, characterised in that the two punch bodies (13, 14) are connected with each other with a form fit by means of a mechanical guide (18).

4. Punch head according to one of Claims 1 to 3, characterised in that the tools (8, 9) are punch blades of metal and that the punch head (10) is provided for the processing of extruded aluminium section pieces.

## Revendications

1. Tête d'estampage (10) dans une machine d'assemblage d'angles pour relier des pièces profilées creuses (1) présentant plusieurs équerres d'angle (6, 7) qui sont décalées les unes par rapport aux autres perpendiculairement à la surface dans laquelle les pièces profilées creuses (1) sont situées, tête d'estampage dans laquelle :
a) la tête d'estampage (10) comprend un premier corps d'estampage (13) qui est disposé en pouvant coulisser parallèlement à une première branche d'une équerre d'angle (6, 7) reliant la pièce profilée creuse (1),
b) des outils (9) peuvent être montés dans le corps d'estampage (13), et ils agissent de l'extérieur sur la pièce profilée creuse (1) en des points prédéterminés de celle-ci,
c) la tête d'estampage (10) présente au moins un deuxième corps d'estampage (14) qui peut coulisser par rapport au premier corps d'estampage (13), qui peut être bloqué et dans lequel un outil (8) peut être monté,
d) le deuxième corps d'estampage (14) est disposé en pouvant coulisser par rapport au premier corps d'estampage (13) parallèlement à la surface dans laquelle les pièces profilées creuses (1) sont situées, et :
e) le deuxième corps d'estampage (14) est disposé sur le premier corps d'estampage (13) pour que les outils (8, 9) des deux corps d'estampage (13, 14) agissent en même temps sur la pièce profilée creuse (1) en plusieurs points qui sont situés en étant décalés perpendiculairement à la surface dans laquelle les pièces profilées creuses (1) sont situées.

2. Tête d'estampage selon la revendication 1, caractérisée par le fait que le deuxième corps d'estampage (14) est disposé sur le premier corps d'estampage (13) en pouvant coulisser transversalement et sous un angle prédéterminé à l'aide d'un guidage mécanique (18).

3. Tête d'estampage selon la revendication 1 ou 2, caractérisée par le fait que les deux corps d'estampage (13, 14) sont reliés entre eux par conjugaison des formes par l'intermédiaire d'un guidage mécanique (18).

4. Tête d'estampage selon l'une des revendications 1 à 3, caractérisée par le fait que les outils (8, 9) sont des lames d'estampage en métal, et par le fait que la tête d'estampage (10) est prévue pour le traitement de pièces profilées en aluminium extrudé.
